# EUROPÄISCHE PATENTSCHRIFT

(11) **EP 0 615 612 B1**
(45) Veröffentlichungstag und Bekanntmachung des Hinweises auf die Patenterteilung: **08.05.1996**
(21) Anmeldenummer: 93920667.8
(22) Anmeldetag: 25.09.1993
(51) Int. Cl.: G01F 23/28, G01F 25/00

(54) **VORRICHTUNG ZUR FESTSTELLUNG UND/ODER ÜBERWACHUNG EINES VORBESTIMMTEN FÜLLSTANDES**
DEVICE FOR DETERMINING AND/OR MONITORING A PREDETERMINED FILLING LEVEL
DISPOSITIF DE DETERMINATION ET/OU DE CONTROLE D'UN NIVEAU PREDETERMINE DE REMPLISSAGE

(30) Priorität: 02.10.1992 DE 4233185
(43) Veröffentlichungstag der Anmeldung: 21.09.1994
(73) Patentinhaber: Endress u. Hauser GmbH u.Co., D-79689 Maulburg (DE)
(72) Erfinder: ROTTMAR, Werner, D-79585 Steinen (DE)
(86) Internationale Anmeldenummer: DE9300917
(87) Internationale Veröffentlichungsnummer: WO9408214

(56) Entgegenhaltungen:
- WO-A-83/04435
- WO-A-88/01150
- DE-C- 3 931 453
- FR-A- 2 601 446
- US-A- 3 943 440
- US-A- 5 135 002

## Beschreibung

Die Erfindung betrifft eine zur Vorrichtung zur Feststellung und/oder Überwachung eines vorbestimmten Füllstandes mit einem Sensor, der auf der Höhe des zu überwachenden Füllstandes so in einem Behälter angeordnet ist, daß er mit dem Füllgut in Berührung kommt, wenn dieses den vorbestimmten Füllstand erreicht, einer elektronischen Erregungsschaltung, welche über einen piezoelektrischen Erregungs- und Empfangswandler den Sensor zu mechanischen Schwingungen bei seiner Eigenresonanzfrequenz anregt, und mit einer Auswerteschaltung zur Auslösung von Anzeige- und/oder Schaltvorgängen in Abhängigkeit davon, ob die Frequenz der mechanischen Schwingungen des Sensors eine Schaltfrequenz überoder unterschreitet.

Eine Vorrichtung dieser Art ist z. B. aus der DE-PS 39 31 453 bekannt. Bei dieser bekannten Vorrichtung weist der Sensor zwei Schwingstäbe auf, die im Abstand nebeneinander an einer Membran befestigt sind, und durch einen von der elektronischen Erregungsschaltung angeregten piezoelektrischen Erregungs- und Empfangswandler in gegensinnige Schwingungen quer zu ihrer Längsrichtung versetzt werden. Es sind jedoch auch Vorrichtungen dieser Art bekannt, bei denen der Sensor nur einen einzigen Schwingstab aufweist oder in anderer Weise ganz ohne Schwingstäbe ausgebildet ist. In allen Fällen beruht die Funktionsweise der Vorrichtungen darauf, daß sich die Eigenresonanzfrequenz des Sensors ändert, wenn der Sensor mit dem Füllgut in Berührung kommt. Wenn der Sensor von dem Füllgut bedeckt ist, ist seine Eigenresonanzfrequenz niedriger als wenn der Sensor von dem Füllgut frei ist. Die Schaltfrequenz wird so gewählt, daß die zwischen der niedrigeren Eigenresonanzfrequenz bei bedecktem Sensor und der höheren Eigenresonanzfrequenz bei freiem Sensor liegt. Wenn die Auswerteschaltung feststellt, daß die Schwingungsfrequenz des Sensors unter der Schaltfrequenz liegt, ist dies ein Zeichen dafür, daß der Sensor von dem Füllgut bedeckt ist, also der Füllstand im Behälter über der zu überwachenden Höhe liegt. Stellt die Auswerteschaltung dagegen fest, daß die Schwingungsfrequenz des Sensors über der Schaltfrequenz liegt, ist dies ein Anzeichen dafür, daß der Sensor vom Füllgut frei ist, also der Füllstand unter der zu überwachenden Höhe liegt.

Fertigungsbedingt ist die Resonanzfrequenz der Sensoren unterschiedlich. Da andererseits, insbesondere bei Flüssigkeiten geringer Dichte die Eigenresonanzfrequenz bei bedecktem und bei freiem Sensor verhältnismäßig nahe beieinander liegen können, muß die Schaltfrequenz für jeden Sensor individuell eingestellt werden. Die Auswerteschaltung ist dann zwingend mit dem Sensor gepaart. Wenn sie in Verbindung mit einem anderen Sensor verwendet werden soll, muß sie auf diesen anderen Sensor neu abgestimmt werden, wozu die Eigenresonanzfrequenz des anderen Sensors bekannt sein muß. Diese Abstimmung kann gewöhnlich nicht ohne weiteres am Verwendungsort der Vorrichtung vorgenommen werden. Dies erschwert die Durchführung von Reparatur- und Wartungsarbeiten der Vorrichtung.

Aufgabe der Erfindung ist die Schaffung einer Vorrichtung der eingangs angegebenen Art, bei der jede Auswerteschaltung in Verbindung mit jedem beliebigen Sensor verwendet werden kann, ohne daß eine individuelle Abstimmung der Auswerteschaltung für den jeweiligen Sensor erforderlich ist.

Diese Aufgabe wird mit einer Vorrichtung gemäß Anspruch 1 gelöst.

Bei der Herstellung der erfindungsgemäßen Vorrichtung werden alle Auswerteschaltungen gleich ausgebildet. Für jeden Sensor wird dessen Eigenfrequenz im freiem Zustand gemessen und der Widerstandswert des Kennungswiderstandes in Abhängigkeit von der gemessen Eigenresonanzfrequenz ausgewählt. Der Kennungswiderstand wird in eine Aufnahmefassung eingesetzt und so dem Sensor zugeordnet. Die Auswerteschaltung ist dann so ausgebildet, daß sie ein elektrisches Signal erzeugt, dessen elektrische Größe von dem Widerstandswert des Kennungswiderstandes abhängig ist und eine Einrichtung enthält, die das Kennungswiderstandssignal erkennt und die dem jeweiligen Sensor individuell zugeordnete Schaltfrequenz in Abhängigkeit vom Widerstandswert des Kennungswiderstandes einstellt. Auf diese Weise kann jede Auswerteschaltung mit jedem Sensor kombiniert werden, ohne daß besondere Einstellungen zur Anpassung der Auswerteschaltung an den Sensor vorgenommen werden müssen.

Vorteilhafte Ausgestaltungen und Weiterbildungen der Erfindung sind in den Unteransprüchen gekennzeichnet.

Weitere Merkmale und Vorteile der Erfindung ergeben sich aus der folgenden Beschreibung eines Ausführungsbeispieles, daß in den Zeichnungen dargestellt ist.

Die Zeichnungen zeigen:
- Fig. 1: eine Ansicht der Vorrichtung.
- Fig. 2: einen vergrößerten unsymmetrischen Längsschnitt durch die Steckverbindung im zusammengefügten Zustand.
- Fig. 3: einen Schnitt durch den Aufnehmer,
- Fig. 4: einen teilweisen Schnitt durch den Buchsenstecker,
- Fig. 5: einen teilweisen Schnitt durch die Aufnahmefassung,
der Steckverbindung.

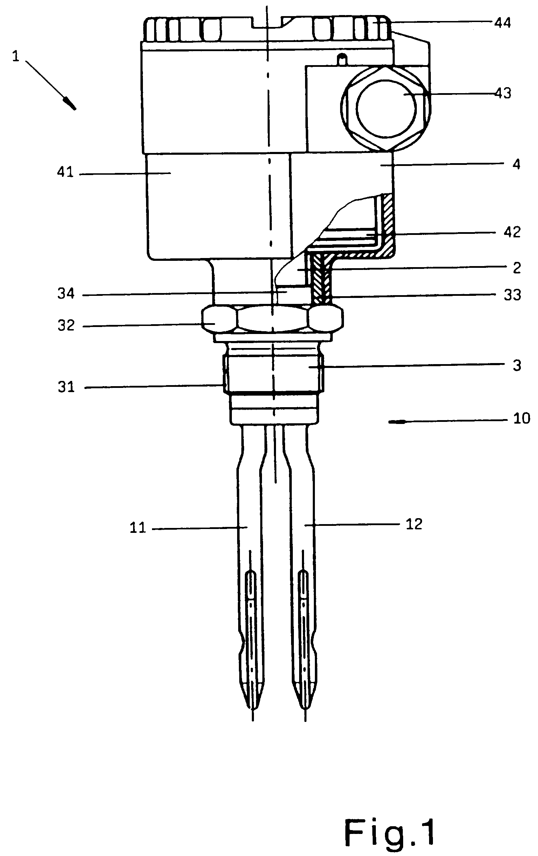

In Figur 1 ist unter 1 eine Vorrichtung zur Feststellung und/oder Überwachung eines vorbestimmten Füllstandes dargestellt. Sie besteht aus den Schwingstäben 11, 12 der Steckverbindung 2, dem Einschraubstück 3 und dem Elektronikgehäuse 4. Die Schwingstäbe 11, 12 ragen in das Innere eines nichtdargestellten Behälters, dessen Füllstand mittels der Vorrichtung 1 festgestellt und/oder überwacht werden soll. Das Einschraubstück 3 ist von zylindrischer Form und weist ein zylindrisches Außengewinde 31 auf, mit welcher die Vorrichtung 1 in der Wand des Behälters, dessen Füllstand festgestellt und/oder überwacht werden soll, befestigt ist.

Weiter weist das Einschraubstück 3 den Sechskant 32 auf. Der Sechskant 32 dient der Einleitung eines Drehmomentes, mit dessen Hilfe die Vorrichtung 1 mit dem Gewinde 31 in dem Innengewinde einer die Behälterwand durchdringenden Bohrung befestigt ist. Auf der, dem Gewinde 31 abgewandten Seite schließt sich an den Sechskant 32 ein rohrförmiger Bund 33 an. Seine Stirnfläche fällt mit dem Boden des Innenraumes 41 des Elektronikgehäuses 4 zusammen. Das Innere des Einschraubstückes 3 bildet einen Hohlraum 34 in welchem der nicht dargestellte piezoelektrische Erregungs- und Empfangswandler und auch die Steckverbindung 2 angeordnet ist. Über die Steckverbindung 2 ist der piezoelektrische Erregungsund Empfangswandler mit der, im Innenraum 41 des Elektronikgehäuses 4 auf einer Leiterplatte 42 angeordneten elektronischen Erregungsschaltung verbunden. Auf der Leiterplatte 42 befindet sich neben der Erregungsschaltung für den piezoelektrischen Erregungs- und Empfangswandler auch die Auswerteschaltung der Vorrichtung. In dem Innenraum 41 sind außerdem elektrische Anschlußmittel angeordnet, über welche die Auswerteschaltung mit einem entfernt vom Meßort angeordneten Aktor oder einem Anzeige- und/oder Überwachungsgerät verbunden ist. Die PG-Verschraubung 43 dient der Einführung der Verbindungsleitung in das Elektronikgehäuse 4. Der Innenraum 41 ist durch einen Deckel 44 verschlossen. Die Schwingstäbe 11, 12, der piezoelektrische Erregungs- und Empfangswandler, das Einschraubstück 3, einschließlich der Membran für die Schwingstäbe 11, 12 und die Erregungsschaltung (42) bilden zusammen den Sensor 10 der Vorrichtung 1.

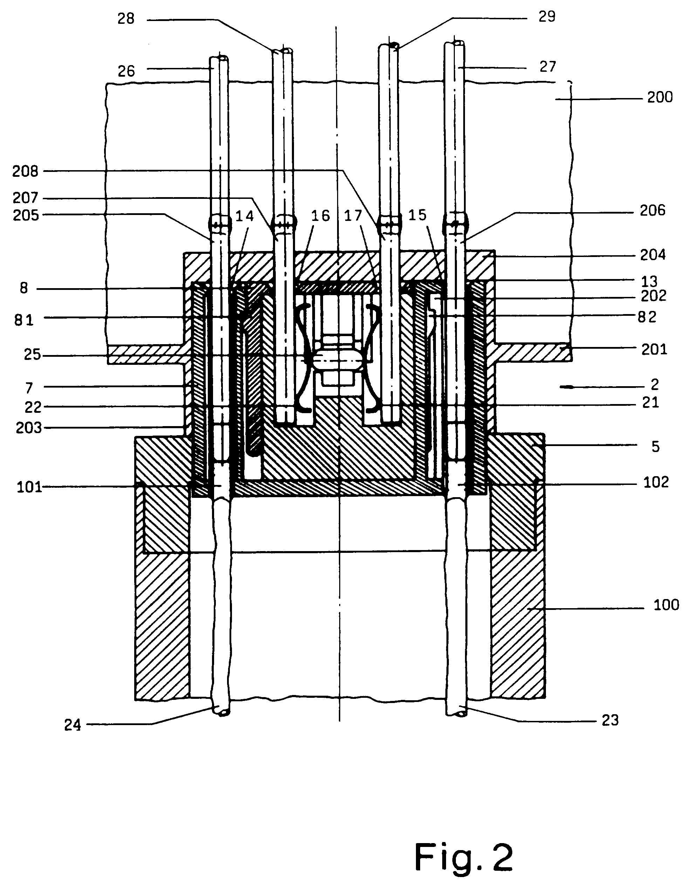

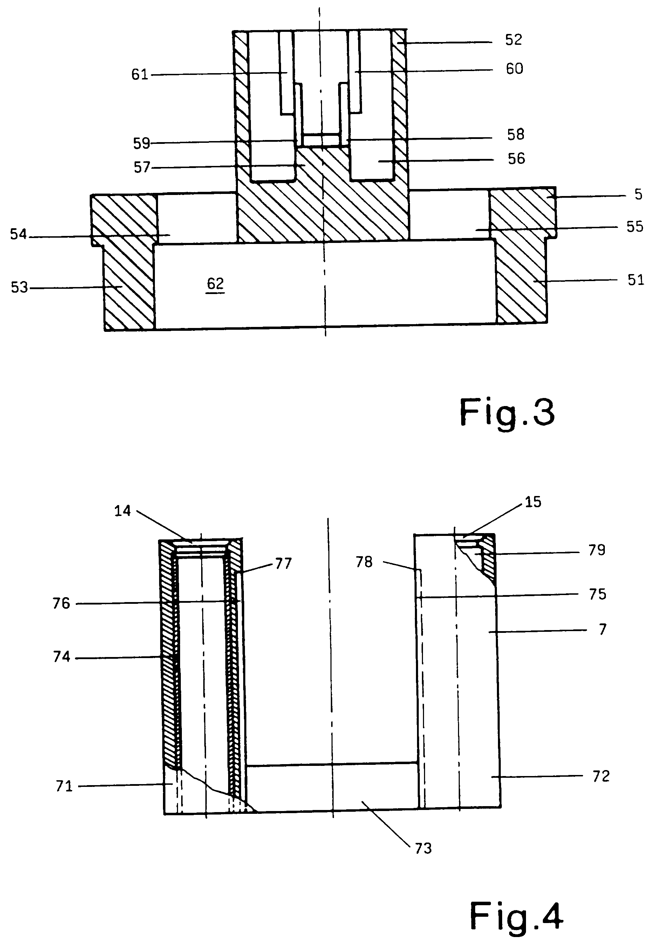

Figur 2 zeigt einen Schnitt durch die Steckverbindung 2. Der besseren Erklärung wegen, ist der Schnitt unsymmetrisch angelegt. Die Steckverbindung 2 besteht aus dem Aufnehmer 5, dem Buchsenstecker 7 und der Aufnahmefassung 8. Der Aufnehmer 5 besteht wie in Figur 3 gezeigt, aus einer zylindrischen Buchse 51 und dem Fassungsgehäuse 52. Die zylindrische Buchse 51 weist einen Abschnitt 53 kleineren Durchmessers auf. Der Abschnitt 53 bildet die formschlüssige Verbindung zu einer Hülse 100, welche ihrerseits in räumlicher Verbindung zu der äußeren Kappselung des in der Hülse 100 angeordneten Erregungs- und Empfangswandler steht. Zwei Öffnungen 54, 55 durchdringen den Boden der zylindrischen Buchse 51. Sie sind zur Aufnahme der beiden Schenkel 71 und 72 des Buchsensteckers 7 bestimmt. Wie aus Figur 2 erkennbar, nehmen im zusammengesetzten Zustand die beiden Schenkel 71 und 72 des Buchsensteckers 7 in den Öffnungen 54, 55 des Aufnehmers 5 eine Lage ein, in der sie sich parallel entlang der Mantelfläche des Fassungsgehäuses 52 erstrecken und ein kurzes Stück über das Ende des Fassungsgehäuses 52 hinausragen.

Das Innere des Fassungsgehäuses 52 ist durch eine Öffnung 56 gebildet, welches sich von dem, der zylindrischen Buchse 51 abgewandten Ende des Aufnehmers 5 ein Stück in axialer Richtung erstreckt. Die Öffnung 56 hat einen Querschnitt in Form eines quaternär durchdrungenen Rhombus. Ein zentrischer Sockel 57 bildet im Zusammenwirken mit den Stegen 58, 59 und den Nuten 60, 61, die Halterung für die zwei Kontaktfedern 21, 22. Der Aufnehmer 5 kann vorteilhafterweise als Spritzteil aus einem Kunststoff hergestellt sein.

In Figur 4 ist ein teilweiser Schnitt durch den Buchsenstecker 7 gezeigt. Die beiden Schenkel 71, 72 sind durch den Steg 73 verbunden. Im zusammengefügten Zustand wird sich die Oberkante des Steges 73 am Boden der zylindrischen Öffnung 62 des Aufnehmers 5 abstützen. Die Schenkel 71, 72 umschließen einen Hohlraum, welcher jeweils von einer metallischen Steckerbuchse 74, 79 durchdrungen ist. Elektrische Leitungen, von denen der Einfachheit halber nur zwei Leitungen 23, 24 gezeigt sind, stellen die elektrische Verbindung zwischen dem Erregungs- und Empfangswandler und den Steckerbuchsen 74, 79 her. Die elektrischen Leitungen 23, 24 sind, mittels einer geeigneten Verbindungstechnik, z. B. einer Lötverbindung 101, 102, mit den metallischen Steckerbuchsen 74, 79 verbunden. An den Mantelflächen der Schenkel 71, 72, sind auf der, einander zugewandten Seite, Führungsnuten 75, 76 so angeformt, daß sich die Führungsnuten 75, 76 gegenüberliegen. Sie erstrecken sich axial von dem Steg 73 und durchdringen den Steg 73 beidseitig vollkommen. Die Erstrekkung erfolgt jedoch nicht völlig bis zum anderen Ende der Schenkel 71, 72, sondern endet jeweils in einer Haltekante 77, 78. Im zusammengefügten Zustand sind die Führungsnuten 75, 76 zur Aufnahme der zwei gegenüberliegenden Arretierungsfedern 81, 82 der Aufnahmefassung 8 bestimmt. Die Stirnflächen der Schenkel 71, 72 sind von den Öffnungen 14, 15 durchdrungen.

Der Aufnehmer 5 kann wie der Buchsenstecker 7 vorteilhaft als Spritzteil aus einem geeigneten Kunststoff hergestellt sein.

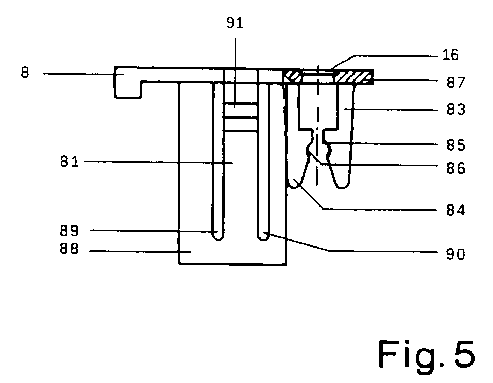

Figur 5 zeigt einen teilweisen Schnitt durch die Aufnahmefassung 8. Die Aufnahmefassung 8 ist zur Aufnahme und Halterung des Kennungswiderstandes 25 bestimmt. Dazu ist an der Aufnahmefassung 8 eine, aus zwei Federschenkeln 83, 84 gebildete Widerstandshalterung angeformt. Der eingesetze Widerstand 25 wird dabei von den Federschenkeln 83, 84 so gehalten, daß die Mantelfläche des Widerstandes 25 von halbkreisförmigen Auflagen 85, 86 umfaßt ist. Weiter weist die Aufnahmefassung 8 eine Halteplatte 87 und sich rechtwinklig zur Halteplatte 87 erstreckende, gegenüberliegende Führungen 88 auf, von denen in Figur 5 nur eine gezeigt ist. Die zweite Führung ist in der Zeichenblattebene hinter der Führung 88 auf der gegenüberliegenden Seite an der Halteplatte 87 angeformt. Die Führungen 88 sind von zwei Längsschlitzen 89, 90 fast völlig durchbrochen. Der so entstehende mittlere Steg bildet die Arretierungsfedern 81, 82. An den Arretierungsfedern 81, 82 ist jeweils ein rechteckiger Arretierungsriegel 91 angeformt. Weiter durchdringt eine Bohrung 16 fluchtend zu der Symmetrieachse der Auflagen 83, 84 die Halteplatte 87. Auch die Aufnahmefassung 8 kann aus einem geeigneten Werkstoff als Spritzteil hergestellt sein.

Das Zusammenfügen der Steckverbindung 2 geschieht nun derart, daß zunächst die elektrische Verbindung zwischen dem piezoelektrischen Erregungs- und Empfangswandler und den Steckerbuchsen 74, 79 über die elektrischen Leitungen 23, 24 hergestellt und die Steckerbuchsen 74, 79 in die Schenkel 71, 72 des Buchsensteckers 7 eingesetzt und arretiert werden. Gleichzeitig erfolgt das Einsetzen der Kontaktfedern 21, 22 in die Öffnung 56 des Aufnehmers 5. Nach Feststellung der Eigenresonanzfrequenz des Sensors im freiem Zustand und Auswahl des zuzuordnenden Kennungswiderstandes 25 wird dieser in die Aufnahmefassung 8 eingesetzt. Es folgt das Einführen des Buchsensteckers 7 in die Öffnungen 54, 55 des Aufnehmers 5. Das Festlegen der Lage der Teile Aufnehmer 5, Buchsenstecker 7 und Aufnahmefassung 8 zueinander erfolgt durch das lagerichtige Aufsetzen der Aufnahmefassung 8 auf die Stirnseite des Fassungsgehäuse 52. Das nachfolgende Zusammendrücken der Teile 7 und 8 bewirkt, daß der Kennungswiderstand 25 in die Öffnung 56 eingeführt und bei Anliegen der Halteplatte 87 an der Stirnfläche des Fassungsgehäuses 52, eine Lage einnimmt, in welcher er in elektrischen Kontakt mit den Kontaktfedern 21 und 22 steht. Gleichzeitig ist die Aufnahmefassung 8 von den Führungen 88 so geführt, daß die Arretierungsfedern 81, 82 eine Lage innerhalb der Führungsnuten 75, 76 einnehmen und der Arretierungsriegel 91 der Aufnahmefassung 8 an den Haltekanten 77, 78 des Buchsensteckers 7 einrastet. Damit ist unter Einklemmen des Teiles 5 zwischen den Teilen 7, 8 eine lösbare Verbindung gebildet, welche die Lage der Teile so zueinander festlegt, daß die Buchsenseite einer Steckverbindung 2 ausgebildet und gleichzeitig der Kennungswiderstand 25 in elektrischem Kontakt zu den Haltefedern 21, 22 gehalten ist.

Nach dem Zusammenfügen der Teile 5, 7, 8 nimmt die Halteplatte 87 eine Lage so zwischen den Enden der Schenkel 71 und 72 ein, daß die aus den Stirnflächen der Schenkel 71, 72 und der Rückfläche der Halteplatte 87 gebildete Fläche 13 durchgehend ist und nur von den Öffnungen 14, 15, 16, 17 durchbrochen wird.

Im Innenraum des Elektronikgehäuses 4 ist auf der Leiterplatte 42 die elektronische Erregungsschaltung und die Auswerteschaltung angeordnet. Zur elektrischen Isolierung beider Schaltungen gegenüber dem Elektronikgehäuse 4 sind die Schaltungen von einem topfförmigen Isolationskörper 200 umschlossen. In Figur 2 ist ein Stück des topfförmigen Isolationskörpers 200 dargestellt. Der Boden 201 des Isolationskörpers ist nicht durchgehend eben, sondern springt in einem zentrischen Bereich ein Stück zurück und bildet so eine Steckermulde 202, deren umschließende Wand 203 sich rechtwinklig noch ein Stück weiter von dem Boden 201 erstreckt, und so eine, die Steckverbindung 2 umschließende Isolierung bildet. In Fortsetzung des Bodens 201 ist die Steckermulde 202 durch den Kontaktträger 204 abgeschlossen. Gegenüber dem Boden 201 weist der Kontaktträger 204 eine wesentlich größere Wandstärke auf. Der Kontaktträger 204 ist von zylindrischen Kontaktstiften 205, 206, 207, 208 so durchdrungen, daß die Kontaktstifte noch ein Stück in den, der Leiterplatte 42 zugewandten Innenraum des Isolierkörpers 200 ragen. Kontaktstifte 205 bis 208 können durch jede, dem Fachmann bekannte, geeignete Befestigungsart in dem Kontaktträger 204 befestigt sein. Dies kann z. B. durch ein Umspritzen geschehen.

Durch die Anordnung des Kontaktträgers 204 mit den Kontaktstiften 205 bis 208 ist die Stiftseite der Steckverbindung 2 ausgebildet.

An den Kontaktstiften 205 bis 208 angeschlossene elektrische Leitungen 26, 27, 28, 29 stellen die elektrische Verbindung zur Leiterplatte 42 her. Das Anschließen der elektrischen Leitungen 26 bis 29 an den Kontaktstiften 205 bis 208 kann durch jede, dem Fachmann bekannte Verbindungsart, z. B. durch Löten, geschehen. Durch das Schließen der Steckverbindung 2 sind die Kontaktstifte 205, 206 unter Durchdringung der Öffnungen 14, 15 mit den Kontaktbuchsen 74, 79 und gleichzeitig die Kontaktstifte 207, 208 unter Durchdringung der Öffnungen 16, 17 mit den Kontaktfedern 21, 22 in elektrischen Kontakt gebracht. Damit ist über die elektrischen Leitungen 26, 27, die Kontaktstifte 205, 206, die Kontaktbuchsen 74, 79 und die elektrischen Leitungen 23, 24 die Erregungsschaltung 42 mit piezoelektrischen Erregungs- und Empfangswandler elektrisch verbunden. Gleichzeitig ist über die elektrischen Leitungen 28, 29 die Kontaktstifte 207, 208, die Kontaktfedern 21, 22 jener Stromkreis geschlossen, durch welchen der Kennungswiderstand 25 mit der Auswerteschaltung 42 in elektrischen Kontakt steht.

Es ist nun für den Fachmann klar erkenntlich, daß über die Steckverbindung 2 die elektrische Verbindung zwischen der Erregungsschaltung und dem piezoelektrischen Erregungsund Empfangswandler und gleichzeitig zwischen dem Kennungswiderstand 25 und der Auswerteschaltung 42 leicht geschlossen und wieder getrennt werden und dadurch ermöglicht ist, daß jede Auswerteschaltung mit jedem Sensor leicht kombiniert werden kann. Dadurch ist auch die Durchführung von Reparatur- und Wartungsarbeiten wesentlich erleichtert.

Das mit der Zuordnung beliebiger Auswerteschaltungen 42 zu beliebigen Sensoren 10 verbundene Auswechseln des Kennungswiderstandes 25 kann auf ebenso einfache Weise geschehen, in dem nach Trennen der Steckverbindung 2 und Entsperren der Arretierungsriegel 91, etwa mittels eines schmalen Schraubendrehers, die Aufnahmefassung 8 leicht herausgezogen und der Kennungswiderstand 25 entnommen und wieder eingesetzt werden kann.

## Patentansprüche

1. Vorrichtung zur Feststellung und/oder Überwachung eines vorbestimmten Füllstandes, mit einem Sensor, der auf der Höhe des zu überwachenden Füllstandes so in einem Behälter angeordnet ist, daß er mit dem Füllgut in Berührung kommt, wenn dieses den vorbestimmten Füllstand erreicht, einer elektronischen Erregungsschaltung, welche über einen piezoelektrischen Erregungs- und Empfangswandler den Sensor zu mechanischen Schwingungen bei seiner Eigenresonanzfrequenz anregt, und mit einer Auswerteschaltung zur Auslösung von Anzeige- und/oder Schaltvorgängen in Abhängigkeit davon, ob die Frequenz der mechanischen Schwingungen des Sensors eine Schaltfrequenz über- oder unterschreitet
**dadurch gekennzeichnet** daß
a) zwischen der elektrischen Erregungsschaltung (42) und dem piezoelektrischen Erregungs- und Empfangswandler, sowie zwischen einem Kennungswiderstand (25) und der Auswerteschaltung (42) eine Steckverbindung (2) angeordnet ist, welche die elektrische Verbindung (23, 24, 26, 27, 74, 79, 205, 206) zwischen der elektronischen Erregungsschaltung (42) und dem piezoelektrischen Erregungs- und Empfangswandler, sowie die elektrische Verbindung (21, 22, 28, 29, 207, 208) zwischen dem Kennungswiderstand (25) und der Auswerteschaltung (42) herstellt, daß
b) die Steckverbindung (2) eine Aufnahmefassung (8) für den Kennungswiderstand (25) umschließt und daß
c) der Kennungswiderstand (25) so ausgewählt ist, daß er in eindeutiger Beziehung zu der Eigenresonanzfrequenz des Sensors steht.

2. Vorrichtung nach Anspruch 1, **dadurch gekennzeichnet,** daß die Steckverbindung (2) aus der, einstückig mit dem, die elektronische Schaltung (42), umschließenden Isolierkörper (200) verbundenen Steckeraufnahme (202) gebildeten Stiftteil und aus dem, von den Teilen Aufnehmer (5), Buchsenstecker (7) und Aufnahmefassung (8) bestehenden Buchsenteil gebildet ist.

3. Vorrichtung nach Anspruch 1, **dadurch gekennzeichnet,** daß die Steckverbindung (2) in einem Hohlraum (34) des Sensors (10) angeordnet ist.

4. Vorrichtung nach Anspruch 1, **dadurch gekennzeichnet,** daß die Steckverbindung (2) im wesentlichen von einem Isolierkörper (203, 204) umschlossen ist.

5. Vorrichtung nach Anspruch 2, **dadurch gekennzeichnet,** daß der Aufnehmer (5) aus den zwei einstückig angeformten Teilen Buchse (51) und Fassungsgehäuse (52) besteht.

6. Vorrichtung nach Anspruch 5, **dadurch gekennzeichnet,** daß in der Öffnung (54) des Fassungsgehäuses (52) Kontaktfedern (21, 22) angeordnet sind.

7. Vorrichtung nach Anspruch 6, **dadurch gekennzeichnet,** daß in der Öffnung (54) des Fassungsgehäuses (52) ein Sockel (57), Stege (58, 59) und Nuten (60, 61) zur Aufnahme und Arretierung der Kontaktfedern (21, 22) angeformt sind.

8. Vorrichtung nach Anspruch 2, **dadurch gekennzeichnet,** daß der Buchsenstecker (7) einstückig aus den mindestens zwei Schenkeln (71, 72) und einen, die Schenkel (71, 72) verbindenden Steg (73) gebildet ist und die Schenkel (71, 72) metallische Steckerbuchsen (74, 79) umschließen.

9. Vorrichtung nach Anspruch 8, **dadurch gekennzeichnet,** daß an den Schenkeln (71, 72), sich gegenüberliegende Führungsnuten (75, 76) angeformt sind, welche in rechtwinklig zur Symmetrieachse verlaufenden Haltekanten (77, 78) enden.

10. Vorrichtung nach Anspruch 2, **dadurch gekennzeichnet,** daß die Aufnahmefassung (8) einstückig aus den Teilen Arretierungsfedern (81, 82), Federschenkeln (83, 84), Führungen (88), Arretierungsriegel (91) und der Halteplatte (87) gebildet ist.

11. Vorrichtung nach Anspruch 2, **dadurch gekennzeichnet,** daß die Teile Aufnehmer (5), Buchsenstecker (7), Aufnahmefassung (8), Isolierkörper (200) in einem Spritzverfahren aus einem Kunststoff hergestellt sind.

12. Vorrichtung nach Anspruch 2, **dadurch gekennzeichnet,** daß die Formteile Aufnehmer (5), Buchsenstecker (7), und Aufnahmefassung (8), durch eine aus den Arretierungsfedern (81, 82), den Arretierungsriegeln (91) und den Haltekanten (77, 78) gebildete lösbare Verbindung in ihrer Lage zueinander gehalten sind.

13. Vorrichtung nach Anspruch 1, **dadurch gekennzeichnet,** daß der Kennungswiderstand (25) in einer durch die Auflagen (85, 86)der Federschenkel (83, 84) der Aufnahmefassung (8) bestimmten Lage, so in dem Innenraum (56) des Fassungsgehäuses (52) gehalten ist, daß er in elektrischen Kontakt zu den Kontaktfedern (21, 22) steht.

14. Vorrichtung nach Anspruch 1, **dadurch gekennzeichnet,** daß die aus den Stirnflächen der Schenkel (71, 72) des Buchsensteckers (7) und der Halteplatte (87) der Aufnahmefassung (8) gebildete Fläche (13) von den Öffnungen (14, 15, 16, 17) durchbrochen ist und die Öffnungen (14, 15, 16, 17) von den Kontaktstiften (205, 206, 207, 208) durchdrungen sind.

15. Vorrichtung nach Anspruch 12, **dadurch gekennzeichnet,** daß im zusammengefügten Zustand der Steckverbindung (2), sich die Schenkel (71, 72) des Buchsensteckers (7), die Öffnungen (54, 55) des Aufnehmers (5) durchdringend, axial zu der Mantelfläche des Fassungsgehäuses (52) des Aufnehmers (5) erstrecken und die Halteplatte (87) der Aufnahmefassung (8), von den sich axial zwischen den Mantelflächen der Schenkel (71, 72) und des Fassungsgehäuses (52) erstreckenden Führungen (88) in ihrer Lage festgelegt, an der Stirnfläche des Fassungsgehäuses (52) anlegt, und sich die Federschenkel (81, 82) die Führungsnuten (75, 76), durchdringend mit ihren Arretierungsriegeln (91) an den Haltekanten (77, 78) des Buchsensteckers (7) abstützen.

## Claims

1. An assembly for detecting and/or monitoring a predetermined level, comprising a sensor which is mounted in a vessel at the height of the level to be monitored in such a way as to come into contact with the contents of the vessel when said contents reach a predetermined level, an electronic excitation circuit which excites the sensor into mechanical vibrations at its natural frequency via a piezoelectric excitation and receiving transducer, and an evaluation circuit for initiating indicating and/or switching operations depending on whether the frequency of the mechanical vibrations of the sensor rises above or drops below a switching frequency,
characterized in
a) that a connector (2) is provided between the electric excitation circuit (42) and the piezoelectric excitation and receiving transducer as well as between an identification resistor (25) and the evaluation circuit (42), said connector (2) providing the electrical connection (23, 24, 26, 27, 74, 79, 205, 206) between the electronic excitation circuit (42) and the piezoelectric excitation and receiving transducer as well as the electrical connection (21, 22, 28, 29, 207, 208) between the identification resistor (25) and the evaluation circuit (42),
b) that the connector (2) encloses a socket (8) for the identification resistor (25), and
c) that the identification resistor (25) is chosen to have a definite relationship to the natural frequency of the sensor.

2. An assembly as claimed in claim 1, characterized in that the connector (2) consists of the plug receptacle (202), which is integral with the insulating body (200) enclosing the electronic circuit (42), and the socket part consisting of receptacle (5), female connector (7), and socket (8).

3. An assembly as claimed in claim 1, characterized in that the connector (2) is located in a hollow space (34) of the sensor (10).

4. An assembly as claimed in claim 1, characterized in that the connector (2) is substantially enclosed by an insulating body (203, 204).

5. An assembly as claimed in claim 2, characterized in that the receptacle (5) comprises a socket (51) and a socket housing (52) which are integrally formed thereon.

6. An assembly as claimed in claim 5, characterized in that contact springs (21, 22) are provided in the opening (54) of the socket housing (52).

7. An assembly as claimed in claim 6, characterized in that the opening (54) of the socket housing (52) contains a base (57), connecting members (58, 59), and grooves (60, 61) for receiving the contact springs (21, 22) and locking the latter in position.

8. An assembly as claimed in claim 2, characterized in that the female connector (7) is a one-piece moulding consisting of the at least two legs (71, 72) and a member (73) interconnecting the legs (71, 72), and that the legs (71, 72) enclose metallic plug sockets (74, 79).

9. An assembly as claimed in claim 8, characterized in that opposing guide grooves (75, 76) are formed in the legs (71, 72) and end in holding edges (77, 78) extending perpendicular to the axis of symmetry.

10. An assembly as claimed in claim 2, characterized in that the socket (8) is a one-piece moulding consisting of locking springs (81, 82), spring legs (83, 84), guides (88), locking bar (91), and holding plate (87).

11. An assembly as claimed in claim 2, characterized in that the receptacle (5), the female connector (7), the socket (8), and the insulating body (200) are made from plastic by an injection-moulding process.

12. An assembly as claimed in claim 2, characterized in that the receptacle (5), the female connector (7), and the socket (8) are held in position relative to each other by a nonpermanent joint formed by the locking springs (81, 82), the locking bars (91), and the holding edges (77, 78).

13. An assembly as claimed in claim 1, characterized in that the identification resistor (25) is held in the interior (56) of the socket housing (52) in a position determined by the locating surfaces (85, 86) of the spring legs (83, 84) of the socket (8) so as to be in electrical contact with the contact springs (21, 22).

14. An assembly as claimed in claim 1, characterized in that the surface (13) formed by the ends of the legs (71, 72) of the female connector (7) and the holding plate (87) of the socket (8) has openings (14, 15, 16, 17), and that contact pins (205, 206, 207, 208) extend through the openings (14, 15, 16, 17).

15. An assembly as claimed in claim 12, characterized in that in the assembled condition of the connector (2), the legs (71, 72) of the female connector (7), extending through the openings (54, 55) of the receptacle (5), extend axially to the outer surface of the socket housing (52) of the receptacle (5), and the holding plate (87) of the socket (8), fixed in position by the guides (88) extending axially between the outer surfaces of the legs (81, 82) and the socket housing (52), rests against the end surface of the socket housing (52), and the spring legs (81, 82), extending through the guide grooves (75, 76), are supported by the holding edges (77, 78) of the female connector (7) via their locking bars (91).

## Revendications

1. Dispositif servant à constater et/ou à surveiller un niveau de remplissage prédéterminé, équipé d'un capteur qui est disposé dans un récipient sur la hauteur du niveau de remplissage à surveiller, de sorte qu'il vient en contact avec la matière de remplissage lorsque cette matière a atteint le niveau prédéterminé, équipé d'un circuit d'excitation électronique qui, via un transducteur piézoélectrique d'excitation et de réception, excite le capteur par des vibrations mécaniques à sa fréquence de résonance propre et qui, avec un circuit de détection, procède au déclenchement de processus d'affichage et/ou de commutation en fonction du fait que la fréquence des vibrations mécaniques du capteur est supérieure ou inférieure à une fréquence de commutation,
caractérisé
(a) en ce qu'une connexion enfichable (2) est disposée entre le circuit d'excitation (42) et le transducteur piézoélectrique d'excitation et de réception, ainsi qu'entre une résistance d'identification (25) et le circuit de détection (42), connexion enfichable qui établit la connexion électrique (23, 24, 26, 27, 74, 79, 205, 206) entre le circuit d'excitation électronique (42) et le transducteur piézoélectrique d'excitation et de réception, ainsi que la connexion électrique (21, 22, 28, 29, 207, 208) entre la résistance d'identification (25) et le circuit de détection (42),
(b) en ce que la connexion enfichable (2) contient une monture d'alvéole (8) pour la résistance d'identification (25),
(c) et en ce que la résistance d'identification (25) est sélectionnée de façon telle qu'elle est en relation univoque avec la fréquence de résonance propre du capteur.

2. Dispositif selon la revendication 1, caractérisé en ce que la connexion enfichable (2) est composée de la partie mâle, assemblée en une seule pièce, formée du réceptacle de broche (202), avec le corps isolant (200) entourant le circuit électronique (42), et de la partie femelle formée des éléments constituant le capteur (5), la broche femelle (7) et la monture d'alvéole (8).

3. Dispositif selon la revendication 1, caractérisé en ce que la connexion enfichable (2) est disposée dans une cavité (34) du capteur (10).

4. Dispositif selon la revendication 1, caractérisé en ce que la connexion enfichable (2) est entourée sensiblement d'un corps isolant (203, 204).

5. Dispositif selon la revendication 2, caractérisé en ce que le capteur (5) se compose des deux parties, assemblées en une seule pièce, constituant une douille (51) et un boîtier de monture (52).

6. Dispositif selon la revendication 5, caractérisé en ce que des ressorts de contact (21, 22) sont disposés dans l'ouverture (54) du boîtier de monture (52).

7. Dispositif selon la revendication 6, caractérisé en ce que, dans l'ouverture (54) du boîtier de monture (52), sont formés un socle (57), des âmes (58, 59) et des rainures (60, 61) servant à recevoir et à bloquer les ressorts de contact (21, 22).

8. Dispositif selon la revendication 2, caractérisé en ce que la broche femelle (7) est composée au moins des deux branches (71, 72) assemblées en une seule pièce et d'une âme (73) reliant les branches (71, 72), et en ce que les branches (71, 72) entourent des douilles mâles métalliques (74, 79).

9. Dispositif selon la revendication 8, caractérisé en ce que, au niveau des branches (71, 72), sont formées des rainures de guidage opposées (75, 76) qui se terminent par des arêtes de retenue (77, 78), à angle droit par rapport à l'axe de symétrie.

10. Dispositif selon la revendication 2, caractérisé en ce que la monture d'alvéole (8), assemblée en une seule pièce, se compose des éléments constituant les ressorts d'arrêt (81, 82), les branches à ressort (83, 84), les guidages (88), les verrous d'arrêt (91) et la plaque de retenue (87).

11. Dispositif selon la revendication 2, caractérisé en ce que les éléments constituant le capteur (5), la broche femelle (7), la monture d'alvéole (8) et le corps isolant (200) sont réalisés dans une matière plastique fabriquée par un procédé par injection.

12. Dispositif selon la revendication 2, caractérisé en ce que les pièces moulées constituant le capteur (5), la broche femelle (7) et la monture d'alvéole (8) sont maintenues dans leur emplacement, l'une par rapport à l'autre, au moyen d'une liaison démontable formée par les ressorts d'arrêt (81, 82), les verrous d'arrêt (91) et les arêtes de retenue (77, 78).

13. Dispositif selon la revendication 1, caractérisé en ce que la résistance d'identification (25) est maintenue dans une position déterminée, dans l'espace intérieur (56) du boîtier de monture (52), au moyen des surfaces de contact (85, 86) des branches à ressort (83, 84) de la monture d'alvéole (8), de façon telle qu'elle est en contact électrique avec les ressorts de contact (21, 22).

14. Dispositif selon la revendication 1, caractérisé en ce que la surface (13), constituée par les surfaces frontales des branches (71, 72) de la broche femelle (7) et de la plaque de retenue (87) de la monture d'alvéole (8), est traversée par les ouvertures (14, 15, 16, 17), et en ce que les ouvertures (14, 15, 16, 17) sont traversées par les broches de contact (205, 206, 207, 208).

15. Dispositif selon la revendication 12, caractérisé en ce que, dans l'état assemblé de la connexion enfichable (2), les branches (71, 72) de la broche femelle (7), traversant les ouvertures (54, 55) du capteur (5), s'étendent axialement par rapport à la surface latérale du boîtier de monture (52) du capteur (5), et en ce que la plaque de retenue (87) de la monture d'alvéole (8), fixée dans sa position par les guidages (88) s'étendant axialement entre les surfaces latérales des branches (71, 72) et du boîtier de monture (52), est en appui contre la surface frontale du boîtier de monture (52), et en ce que les branches à ressort (81, 82), traversant les rainures de guidage (75, 76), viennent en appui, avec leurs verrous d'arrêt (91), contre les arêtes de retenue (77, 78) de la broche femelle (7).
